# EUROPÄISCHE PATENTSCHRIFT

(11) **EP 3 744 500 B1**
(45) Veröffentlichungstag und Bekanntmachung des Hinweises auf die Patenterteilung: **15.01.2025**
(21) Anmeldenummer: 20166632.8
(22) Anmeldetag: 30.03.2020
(51) Int. Cl.: B29C 48/79, B29C 48/92, B29C 48/86, B29C 48/793, B29C 48/37, B29B 7/82, B29B 7/74, B29B 7/72, B29B 7/28, B29B 7/00, B29B 7/58

(54) **VORRICHTUNG ZUR EXTRUSION VON SCHWEFELVERNETZBAREN KAUTSCHUKMISCHUNGEN, DIE VERWENDUNG DER VORRICHTUNG UND EIN VERFAHREN ZUM HERSTELLEN EINER EXTRUDIERTEN, SCHWEFELVERNETZBAREN KAUTSCHUKMISCHUNG**
APPARATUS FOR EXTRUDING SULFUR-CROSSLINKABLE RUBBER MIXTURES, USE OF THE DEVICE AND A METHOD FOR PRODUCING AN EXTRUDED SULFUR-CROSSLINKABLE RUBBER COMPOSITION
DISPOSITIF D'EXTRUSION DE MÉLANGES CAOUTCHOUTEUX RÉTICULABLES AU SOUFRE, UTILISATION DU DISPOSITIF ET PROCÉDÉ DE FABRICATION D'UN MÉLANGE CAOUTCHOUTEUX RÉTICULABLE AU SOUFRE EXTRUDÉ

(30) Priorität: 27.05.2019 DE 102019207728
(43) Veröffentlichungstag der Anmeldung: 02.12.2020
(73) Patentinhaber: Continental Reifen Deutschland GmbH, 30175 Hannover (DE)
(72) Erfinder: Sharifi, Monir, 30419 Hannover (DE)
(74) Vertreter: Continental Corporation

(56) Entgegenhaltungen:
- EP-A1- 1 458 536
- EP-A1- 3 431 251
- EP-A2- 2 338 655
- WO-A1-97/09162
- JP-A- H11 198 214
- JP-A- S5 919 138
- JP-U- S5 192 564
- US-A1- 2018 050 479

## Beschreibung

Die Erfindung betrifft eine Vorrichtung zur Extrusion von schwefelvernetzbaren Kautschukmischungen. Die Erfindung betrifft auch die Verwendung der Vorrichtung und ein Verfahren zum Herstellen einer extrudierten, schwefelvernetzbaren Kautschukmischung.

Aufgrund der momentanen Entwicklungen in der Kautschukindustrie - insbesondere bei der Reifenherstellung - die Herstellungsprozesse vollständig zu automatisieren, wachsen die Qualitätsanforderungen an das jeweilige Kautschukprodukt ständig. Insbesondere von Bedeutung sind das Gewicht und geometrische Maße der extrudierten Kautschukmischung, welche häufig in Form eines Endlos-Streifens vorliegt. Bei der Extrusion wird eine angemischte Kautschukmischung beispielsweise mittels der Schnecken in einem Zweischnecken-Extruders extrudiert und anschließend mittels einer Formeinheit wie beispielsweise einer Vor- und Endschablone zu einem Kautschukprofil ausgeformt. Abweichungen von den geometrischen Maßen oder zu große Schwankungen beim Gewicht der extrudierten Kautschukmischung, d.h. dem Kautschukprofil, führen häufig dazu, dass eine Automatisierung nicht möglich ist oder ein zu großer Teil der Kautschukmischung verworfen werden muss. Dies kann somit die Umwelt unnötig belastet oder den Produktionsprozess verlängert.

Die EP2338655A2 offenbart allgemein das Mischen von Kautschukzusammensetzungen, wie sie bei der Reifenherstellung verwendet werden, und insbesondere die kontinuierliche Herstellung von kundenspezifischen Kautschukmischungen.

Die JP25192564U zielt darauf ab, die Funktion eines Extruders durch Anreicherung der Vorwärmvorrichtung zu verbessern, wobei eine ultraschnelle Infrarotstrahlungsheizung als Vorwärmvorrichtung verwendet wird, wobei der Extruder, der während der empfangenden Vibration gespeist wird, wird nicht erwärmt.

Die EP3431251A1 offenbart ein Verfahren zur Ermittlung des Schrumpfverhaltens einer Kautschukmischung, wobei das Verfahren die folgenden Schritte umfasst: a. Bereitstellen einer Kautschukmischung mit einer Temperatur im Temperaturbereich T1, b. Extrudieren der Kautschukmischung mit der Temperatur im Temperaturbereich T1mittels einer Extrusionsvorrichtung zu einem extrudierten Profil, wobei die Kautschukmischung in der Extrusionsvorrichtung eine Temperatur im Temperaturbereich von T2aufweist, c. Schneiden, des extrudierten Profils zu einem Profil mit einer Länge L1, d. Temperieren des geschnitten Profils mit einer Länge L1bei der Umgebungstemperatur im Bereich T3für einen vorbestimmten Zeitraum, e. Messen des Betrages der Länge L2des temperierten Profils.

Die JPS5919138A beschreibt die Verwendung von Infrarotstrahler, wobei der Infrarotstrahlstrahler im Fokus einer elliptischen reflektierenden Oberfläche oder einer parabolisch reflektierenden Oberfläche angeordnet ist. Es wird die Oberfläche eines unvulkanisierten Gummiformkörpers, der ein Schaummittel enthält, schnell erhitzt, um eine vulkanisierte Oberflächenschicht zu erzeugen, wodurch ein Gummiartikel erhalten wird.

Eine primäre Aufgabe, die der Erfindung zugrunde liegt, besteht daher darin, eine Vorrichtung zur Extrusion von schwefelvernetzbaren Kautschukmischungen bereitzustellen, welche die vorstehend beschriebenen bekannten Nachteile nicht aufweisen und ein automatisiertes Extrudieren einer Kautschukmischung zu einem Kautschukprofil ermöglicht. Insbesondere war es eine Aufgabe, Kautschukmischungen zu extrudieren, sodass sich ihr vorbestimmtes Gewicht oder ihre vorbestimmten Maße genauer einstellen lassen.

Gelöst wird diese Aufgabe erfindungsgemäß durch eine Vorrichtung zur Extrusion von schwefelvernetzbaren Kautschukmischungen nach Anspruch 1.

Es ist eine große Leistung der vorliegenden Erfindung festgestellt zu haben, dass durch eine Erhöhung der Temperatur einer Kautschukmischung vor dem Extrudieren in einer Zahnradpumpe die Metergewichtsschwankungen des in der Zahnradpumpe extrudierten Kautschukprofils stark reduziert werden können. Dabei können die Abweichungen vom anvisierten Sollwert des Metergewichts durch die spezifische Kombination aus kontaktlosem Erwärmen mittels eines IR-Strahlers und zusätzlichem Extrudieren einer Zahnradpumpe überproportional reduziert werden im Vergleich zu einer Vorrichtung, welche nur einen IR-Strahler mit lediglich irgendeiner Extrusionseinheit oder nur eine Zahnradpumpe mit lediglich irgendeiner Heizquelle umfasst. Eine solche Reduzierung der Abweichungen von dem Sollwert des Metergewichts resultiert in einer Erhöhung der Produktivität von 10 % bis 25 % im Vergleich zu nicht erfindungsgemäßen Vorrichtungen mit anderen Heizquellen oder anderen Extrusionseinheiten und somit zu einer erheblichen Entlastung der Umwelt. Wie nachstehend beschrieben ergibt sich für manche Kautschukmischungen eine über 25 % hinausgehende Reduzierung der Abweichungen oder die vorliegende Erfindung ermöglicht sogar erst ein Extrudieren bestimmter Kautschukmischungen.

Ein IR-Strahler, der dazu ausgelegt, ist eine sich in der Temperiereinheit befindliche schwefelvernetzbare Kautschukmischung auf mindestens 60 °C oder gar über 80 °C zu erwärmen, reduziert die besagten Abweichungen noch weiter und ermöglicht das Prozessiren von hochviskosen Mischungen.

Ohne an eine wissenschaftliche Theorie gebunden sein zu wollen, wird vermutet, dass der hierbei auftretende synergistische Effekt auf der im Rahmen der vorliegenden Erfindung entdeckten spezifischen Kombination von IR-Strahler als kontaktlose Heizquelle und der Zahnradpumpe als Extrusionseinheit, um ein Kautschukprofil herzustellen.

Zahnradpumpen sind aus dem Stand der Technik bekannt. Ein geeigneter IR-Strahler im Rahmen der vorigen Erfindung ist beispielsweise das Modell mit dem Produktnamen "Infrarot Spiralstrahler" oder mit dem Produktnamen "IP 65 Infrarot-Strahler" der Firma Heraeus oder ein entsprechendes Gerät zum kontaktlosen Heizen. Im Rahmen der vorliegenden Erfindung ist der IR-Strahler bevorzugt dazu geeignet, eine Fläche im Bereich von 0,1 bis 1 m³ einem eines Kautschukmischungsfelles zu beheizen, wobei der IR Strahler besonders bevorzugt eine Leistung von im Bereich von einen bis 40 kW/m² aufweist.

Bevorzugt ist eine erfindungsgemäße Vorrichtung wie vorstehend beschrieben oder wie vorstehend als bevorzugt beschrieben, wobei die Vorrichtung Messsensoren umfasst, wobei einer oder mehrere der Messsensoren dazu ausgebildet und angeordnet sind, die Temperatur und den Druck der Kautschukmischung in der Zahnradpumpe zu ermitteln.

Ein Vorteil des vorstehend beschriebenen Aspekts der vorliegenden Erfindung ist, dass durch die Kontrolle mit den vorstehend beschriebenen Messsensoren die Abweichungen im Metergewicht oder von der vordefinierten geometrischen Form des resultierenden Kautschukprofils weiter reduziert werden können.

Die erfindungsgemäße Vorrichtung wie vorstehend beschrieben oder wie vorstehend als bevorzugt beschrieben, umfasst zusätzlich eine Regelungseinheit, die ausgebildet ist, die Temperatur einer Kautschukmischung mittels des IR-Strahlers in Abhängigkeit
- der Antriebsleistung zum Drehen der Zahnräder der Zahnradpumpe
   und/oder
- des Druckes der Kautschukmischung in der Zahnradpumpe und/oder
- der Druckschwankungen der Kautschukmischung in der Zahnradpumpe und/oder
- der Metergewichtsschwankungen der extrudierten Kautschukmischung nach der Zahnradpumpe
zu regeln.

Ein Vorteil des vorstehend beschriebenen Aspekts der vorliegenden Erfindung ist, dass die vorstehend beschriebene Reduzierung oder weitere Reduzierung der Abweichungen beim resultierenden Kautschukprofils durch eine vorstehend beschriebene Regelungseinheit automatisiert werden können und zudem präziser als bei einer vergleichbaren Steuerung erreicht werden können. Dies ist insbesondere mit den vorstehend beschriebenen Messsensoren in Verbindung mit der Zahnradpumpe besonders vorteilhaft und daher bevorzugt.

Bevorzugt ist eine erfindungsgemäße Vorrichtung wie vorstehend beschrieben oder wie vorstehend als bevorzugt beschrieben, wobei die Vorrichtung einen Mischer zum Herstellen von schwefelvernetzbaren Kautschukmischungen aufweist, welcher dem IR-Strahler vorgeschaltet ist. Besonders bevorzugt ist hierbei eine erfindungsgemäße Vorrichtung wie vorstehend als bevorzugt beschrieben, bei der zwischen dem Mischer und dem IR-Strahler eine Lagereinheit zu Lagerung des durch den Mischer angemischte Kautschukmischungsfells vorgesehen ist.

Ein Vorteil des vorstehend beschriebenen Aspekts der vorliegenden Erfindung ist, dass die an gemischten Kautschukmischungen gelagert werden und somit abkühlt. Ohne an eine wissenschaftliche Theorie gebunden sein zu wollen, wird davon ausgegangen, dass das Abkühlen beim Lagern zu besonders hohen Abweichungen im Metergewicht oder von der vordefinierten geometrischen Form des resultierenden Kaautschukprofils bewirken, wodurch der Einsatz einer erfindungsgemäßen Vorrichtung wie vorstehend beschrieben oder wie vorstehend als bevorzugt beschrieben besonders vorteilhaft ist.

Bevorzugt ist eine erfindungsgemäße Vorrichtung wie vorstehend beschrieben oder wie vorstehend als bevorzugt beschrieben, wobei die Vorrichtung zusätzlich mindestens eine Zuführeinheit zum Zuführen von Kautschukmischungen in die nachgeschaltete Zahnradpumpe umfasst, wobei die Zuführeinheit ein Walzwerk oder einen Extruder umfasst, wobei die Zuführeinheit bevorzugt dem IR-Strahler nachgeschaltet ist.

Ein Vorteil des vorstehend beschriebenen Aspekts der vorliegenden Erfindung ist, dass eine vorstehend beschriebene Zuführeinheit die besagten Abweichungen im resultierenden Kautschukprofils noch weiter reduzieren.

Bevorzugt ist eine erfindungsgemäße Vorrichtung wie vorstehend beschrieben oder wie vorstehend als bevorzugt beschrieben, wobei der IR-Strahler dazu eingerichtet ist, eine in die Zuführeinheit oder in die Zahnradpumpe zugefütterte schwefelvernetzbare Kautschukmischung so zu erwärmen, dass die Temperatur der schwefelvernetzbaren Kautschukmischung beim Zufüttern in die Zuführeinheit oder in die Zahnradpumpe zumindest teilweise mindestens 50 °C, bevorzugt mindestens 60 °C, aufweist.

In besonders hohem Maße bevorzugt ist eine erfindungsgemäße Vorrichtung wie vorstehend beschrieben, dadurch gekennzeichnet, dass die Vorrichtung
- mindestens einen IR-Strahler zum Erwärmen einer schwefelvernetzbaren Kautschukmischungen
   und
- mindestens eine dem einen IR-Strahler nachgeschalteten Zahnradpumpe zur Extrusion von mittels des einen IR-Strahlers erwärmten Kautschukmischungen, umfasst, wobei
der IR-Strahler dazu ausgelegt ist, eine schwefelvernetzbare Kautschukmischung auf mindestens 40 °C zu erwärmen,
wobei
- einer oder mehrere der Messsensoren dazu ausgebildet und angeordnet sind, die Temperatur und den Druck der Kautschukmischung in der Zahnradpumpe zu ermitteln,
- die Vorrichtung zusätzlich eine Regelungseinheit umfasst, die ausgebildet ist, die Temperatur einer Kautschukmischung mittels des IR-Strahlers in Abhängigkeit
   - der Antriebsleistung zum Drehen der Zahnräder der Zahnradpumpe
      und
   - des Druckes der Kautschukmischung in der Zahnradpumpe
      und
   - der Druckschwankungen der Kautschukmischung in der Zahnradpumpe
      und
   - der Metergewichtsschwankungen der extrudierten Kautschukmischung nach der Zahnradpumpe
   zu regeln,
   - die Vorrichtung einen Mischer zum Herstellen von schwefelvernetzbaren Kautschukmischungen aufweist, welcher dem IR-Strahler vorgeschaltet ist,
   - die Vorrichtung zusätzlich mindestens eine Zuführeinheit zum Zuführen von Kautschukmischungen in die nachgeschaltete Zahnradpumpe umfasst, wobei die Zuführeinheit ein Walzwerk oder einen Extruder umfasst, wobei die Zuführeinheit bevorzugt dem IR-Strahler nachgeschaltet ist,
   - der IR-Strahler dazu eingerichtet ist, eine in die Zuführeinheit oder in die Zahnradpumpe zugefütterte schwefelvernetzbare Kautschukmischung so zu erwärmen, dass die Temperatur der schwefelvernetzbaren Kautschukmischung beim Zufüttern in die Zuführeinheit oder in die Zahnradpumpe zumindest teilweise mindestens 60 °C aufweist.

Die vorstehend beschriebenen vorteilhaften Aspekte einer erfindungsgemäßen Vorrichtung zur Extrusion von schwefelvernetzbaren Kautschukmischungen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zur Extrusion von schwefelvernetzbaren Kautschukmischungen.

Die Erfindung betrifft auch ein Verfahren zum Herstellen einer extrudierten, schwefelvernetzbaren Kautschukmischung, umfassend die Verfahrensschritte nach Anspruch 7.

Im Rahmen der vorliegenden Erfindung ist der Schritt C) optional, wenn auch ohne Messung sichergestellt ist, dass die temperierte Kautschukmischung beim Zufüttern in die Zahnradpumpe in Schritt D) eine Temperatur von mindestens 40 °C, bevorzugt mindestens 50°C, aufweist.

Im Rahmen der vorliegenden Erfindung kann die Kautschukmischung nach dem Extrudieren in der Zahnradpumpe in einer weiteren Extrusionseinheit wie einem Extruder, einem Kalander oder einer weitere Zahnradpumpe oder wieder durch die besagte Zahnradpumpe ein zweites Mal extrudiert werden, bevor der nachstehend beschriebene Schritt D1) erfolgt.

Bevorzugt ist ein erfindungsgemäßes Verfahren wie vorstehend beschrieben oder wie vorstehend als bevorzugt beschrieben, wobei das Verfahren zusätzlich den folgenden Schritt D1) umfasst:
D1) Ausformen der in Schritt D) in der Zahnradpumpe extrudierten oder in einer Extrusionseinheit extrudierten Kautschukmischung mittels einer Formeinheit wie vorstehend beschrieben, sodass ein Kautschukprofil entsteht, bevorzugt sodass ein Kautschukprofil zur Herstellung eines Fahrzeugluftreifens entsteht.

Das erfindungsgemäße Verfahren wie vorstehend beschrieben oder wie vorstehend als bevorzugt beschrieben, umfasst zusätzlich den folgenden Schritt E):
E) Regeln der Temperatur einer Kautschukmischung mittels des IR-Strahlers in Abhängigkeit
- der Antriebsleistung zum Drehen der Zahnräder der Zahnradpumpe und/oder
- des Druckes der Kautschukmischung in der Zahnradpumpe und/oder
- der Druckschwankungen der Kautschukmischung in der Zahnradpumpe und/oder
- der Metergewichtsschwankungen der extrudierten Kautschukmischung nach der Zahnradpumpe.

Bevorzugt ist ein erfindungsgemäßes Verfahren wie vorstehend beschrieben oder wie vorstehend als bevorzugt beschrieben, wobei die in Schritt B) temperierte schwefelvernetzbare Kautschukmischung unmittelbar vor der Zahnradpumpe oder in der Zuführeinheit zumindest teilweise eine Temperatur im Bereich von 40°C bis 150°C aufweist, bevorzugt im Bereich von 50°C bis 110°C oder 70°C bis 100°C.

Ein Vorteil des vorstehend beschriebenen Aspekts der vorliegenden Erfindung ist, dass durch den erfindungsgemäßen Einsatz einer Zahnradpumpe auch besonders heiße Kautschukmischungen von über 40 °C oder über 50 °C oder sogar über 70 °C in der Zahnradpumpe extrudiert werden können, ohne dass die Kautschukmischung in der Zahnradpumpe eine Temperatur von über 150° einnimmt. Ohne an eine wissenschaftliche Theorie gebunden sein zu wollen erscheint es so, dass dieses Zusammenspiel zwischen Wärme und der Vorbehandlung in der Zahnradpumpe die vorstehend beschriebenen Abweichungen im resultierenden Kautschukprofils weiter reduzieren.

Bevorzugt ist ein erfindungsgemäßes Verfahren wie vorstehend beschrieben oder wie vorstehend als bevorzugt beschrieben, wobei die in Schritt D) zugefütterte schwefelvernetzbare Kautschukmischung mit einem Durchsatz im Bereich von 10 kg/h bis 1000 kg/h, bevorzugt im Bereich von 200 kg/h bis 1000 kg/h, durch die Zahnradpumpe extrudiert wird. Ein solcher Durchsatz wird nur aufgrund der Vorwärmung und des Einsatzes der Zahnradpumpe erreicht.

Bevorzugt ist ein erfindungsgemäßes Verfahren wie vorstehend beschrieben oder wie vorstehend als bevorzugt beschrieben, wobei die in Schritt D) zugefütterte schwefelvernetzbare Kautschukmischung zumindest teilweise
- eine Temperatur in der Zahnradpumpe im Bereich von 20 °C bis 100 °C aufweist, bevorzugt im Bereich von 40 °C bis 70 °C,
   und/oder
- einen Druck im Bereich von 5 bis 400 bar aufweist, bevorzugt im Bereich von 70 bis 200 bar, besonders bevorzugt im Bereich von 80 bis 150 bar, ganz besonders bevorzugt im Bereich von 90 bis 110 bar.

Ein Vorteil des vorstehend beschriebenen Aspekts der vorliegenden Erfindung ist, dass durch den erfindungsgemäßen Einsatz einer Zahnradpumpe Kautschukmischungen bei sehr hohen Drücken extrudiert werden können, ohne dass die Kautschukmischung in der Zahnradpumpe eine Temperatur von über 100° erreicht. Dies ermöglicht es, Kautschukmischungen mit höheren Temperaturen zu extrudieren und somit die besagten Abweichungen zu reduzieren. Ohne an eine wissenschaftliche Theorie gebunden sein zu wollen, erscheint es, dass dieses Zusammenspiel zwischen Wärme und der Vorbehandlung in der Zahnradpumpe bei hohen Drücken wie vorstehend beschriebenen Abweichungen im resultierenden Kautschukprofils weiter reduzieren. Außerdem wird bei hochviskosen Mischungen mit Mooney-Viskosität [ML1+4] bei 20°C von >100 MU und Mischungen mit hohem Naturkautschuk-Anteil (NR), d.h. der phr-Anteil von NR ist größer als 70 phr, durch die Erwärmung die Viskosität deutlich reduziert, bevor die Mischung in die Zahnradpumpe gelangt. Die Reduktion der Viskosität über kontaktlose Erwärmung ermöglicht somit die Prozessierbarkeit dieser Mischung. Hierbei wird insbesondere einer Veränderung der Mischungseigenschaft, genauer gesagt der Abbau der Polymerketten durch die Scherkräfte während des Extrudierens reduziert bzw. verhindert, da die mechanische Beanspruchung durch Zahnradpumpe und Extruder deutlich geringer ist im Vergleich zu bekannten zu Vorrichtungen aus dem Stand der Technik. In dem Stand der Technik ist es üblich, hochviskose Mischungen, insbesondere Mischungskonzepte mit hohem NR Anteil von > 70 phr mittels Extruder und/oder Walzen zu plastifizieren, bevor sie in den Vorformextruder gegeben werden. Der Abbau der Polymerketten ist nicht gewünscht, da sich dadurch die Mischungseigenschaften ändern und zum anderen dieser Abbau nicht kontrolliert abläuft. Falls nicht anders angegeben, beziehen sich die Mooney-Viskositäten im Rahmen der vorliegenden Erfindung immer auf solche bei 20 °C gemessene mit der Methode [ML1+4].

Bevorzugt ist ein erfindungsgemäßes Verfahren wie vorstehend beschrieben oder wie vorstehend als bevorzugt beschrieben, wobei
- die schwefelvernetzbare Kautschukmischung beim Messen der Temperatur in Schritt C) eine Mooney-Viskosität [ML1+4] im Bereich von 40 MU bis 170 MU, bevorzugt im Bereich von 100 MU bis 170 MU, aufweist
   und
- die in Schritt D) zugefütterte schwefelvernetzbare Kautschukmischung eine Mooney-Viskosität [ML1+4] im Bereich von 30 MU bis 150 MU, bevorzugt im Bereich von 100 MU bis 150 MU, aufweist.

Ein Vorteil des vorstehend beschriebenen Aspekts der vorliegenden Erfindung ist, dass insbesondere Kautschukmischungen mit den vorstehend beschriebenen hohen Viskositäten besonders hohe Abweichungen im bisherigen Verfahren aufwiesen. Mit der nun vorliegenden Erfindung ist es möglich, diese starken Abweichungen bei vorstehenden Kautschukmischungen besonders weit zu reduzieren bzw. die Extrusion für die Kautschukmischungen mit den vorstehend als bevorzugt beschriebenen Viskositätsbereichen überhaupt erst zu ermöglichen.

Besonders bevorzugt ist ein Verfahren wie vorstehend beschrieben oder wie vorstehend als bevorzugt beschrieben, wobei die in Schritt A) bereit- oder hergestellte schwefelvernetzbare Kautschukmischung mindestens 70 phr Naturkautschuk (NR) umfasst, da bei diesen Kautschukmischungen der Polymerabbau des Naturkautschuks durch ein erfindungsgemäßes Verfahren verringert wird und dies zu einer weiteren Reduktion der vorstehend beschriebenen Abweichungen führen kann.

Die vorstehend beschriebenen vorteilhaften Aspekte einer erfindungsgemäßen Vorrichtung zur Extrusion von schwefelvernetzbaren Kautschukmischungen und eines erfindungsgemäßen Verfahrens zum Herstellen einer extrudierten, schwefelvernetzbaren Kautschukmischung gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zur Extrusion von schwefelvernetzbaren Kautschukmischungen und eines erfindungsgemäßen Verfahrens zum Herstellen einer extrudierten, schwefelvernetzbaren Kautschukmischung.

Die Erfindung betrifft auch eine Verwendung einer Vorrichtung wie vorstehend beschrieben oder wie vorstehend als bevorzugt beschrieben zum Senken der Schwankungen des Metergewichts von extrudierten, schwefelvernetzbaren Kautschukmischungen.

## Patentansprüche

1. Vorrichtung zur Extrusion von schwefelvernetzbaren Kautschukmischungen, **dadurch gekennzeichnet, dass** die Vorrichtung
- mindestens einen IR-Strahler zum Erwärmen einer schwefelvernetzbaren Kautschukmischungen
und
- mindestens eine dem einen IR-Strahler nachgeschalteten Zahnradpumpe zur Extrusion von mittels des einen IR-Strahlers erwärmten Kautschukmischungen, umfasst, wobei
der IR-Strahler dazu ausgelegt ist, eine schwefelvernetzbare Kautschukmischung auf mindestens 40 °C zu erwärmen,
**dadurch gekennzeichnet, dass**
die Vorrichtung zusätzlich eine Regelungseinheit umfasst, die ausgebildet ist, die Temperatur einer Kautschukmischung mittels des IR-Strahlers in Abhängigkeit
- der Antriebsleistung zum Drehen der Zahnräder der Zahnradpumpe und/oder
- des Druckes der Kautschukmischung in der Zahnradpumpe und/oder
- der Druckschwankungen der Kautschukmischung in der Zahnradpumpe und/oder
- der Metergewichtsschwankungen der extrudierten Kautschukmischung nach der Zahnradpumpe
zu regeln.

2. Vorrichtung nach Anspruch 1, wobei die Vorrichtung Messsensoren umfasst, wobei einer oder mehrere der Messsensoren dazu ausgebildet und angeordnet sind, die Temperatur und den Druck der Kautschukmischung in der Zahnradpumpe zu ermitteln.

3. Vorrichtung nach einem der vorangehenden Ansprüche, wobei die Vorrichtung einen Mischer zum Herstellen von schwefelvernetzbaren Kautschukmischungen aufweist, welcher dem IR-Strahler vorgeschaltet ist.

4. Vorrichtung nach einem der vorangehenden Ansprüche, wobei die Vorrichtung zusätzlich mindestens eine Zuführeinheit zum Zuführen von Kautschukmischungen in die nachgeschaltete Zahnradpumpe umfasst, wobei die Zuführeinheit ein Walzwerk oder einen Extruder umfasst, wobei die Zuführeinheit bevorzugt dem IR-Strahler nachgeschaltet ist.

5. Vorrichtung nach einem der vorangehenden Ansprüche, wobei
- der IR-Strahler dazu eingerichtet ist, eine in die Zuführeinheit oder in die Zahnradpumpe zugefütterte schwefelvernetzbare Kautschukmischung so zu erwärmen, dass die Temperatur der schwefelvernetzbaren Kautschukmischung beim Zufüttern in die Zuführeinheit oder in die Zahnradpumpe zumindest teilweise mindestens 50 °C, bevorzugt mindestens 60 °C, aufweist.

6. Verwendung einer Vorrichtung wie in einem der vorangehenden Ansprüche definiert zum Senken der Schwankungen des Metergewichts von extrudierten, schwefelvernetzbaren Kautschukmischungen.

7. Verfahren zum Herstellen einer extrudierten, schwefelvernetzbaren Kautschukmischung, umfassend die folgenden Verfahrensschritte:
A) Herstellen einer schwefelvernetzbaren Kautschukmischung mittels eines Mischers oder Bereitstellen einer schwefelvernetzbaren Kautschukmischung, wobei die schwefelvernetzbare Kautschukmischung bevorzugt mindestens 70 phr Naturkautschuk umfasst,
B) Temperieren der in Schritt A) hergestellten oder bereitgestellten schwefelvernetzbaren Kautschukmischung mittels eines IR-Strahlers auf mindestens 40 °C,
C) Optionales Messen der Temperatur der Kautschukmischung in der Temperiereinheit,
D) Zufüttern der in Schritt B) temperierten oder der in Schritt C) gemessenen schwefelvernetzbaren Kautschukmischung mit einer Temperatur von 35°C oder mehr in eine Zahnradpumpe und Extrudieren der zugefütterten Kautschukmischung in der Zahnradpumpe und
E) Regeln der Temperatur einer Kautschukmischung mittels des IR-Strahlers in Abhängigkeit
- der Antriebsleistung zum Drehen der Zahnräder der Zahnradpumpe und/oder
- des Druckes der Kautschukmischung in der Zahnradpumpe und/oder
- der Druckschwankungen der Kautschukmischung in der Zahnradpumpe und/oder
- der Metergewichtsschwankungen der extrudierten Kautschukmischung nach der Zahnradpumpe.

8. Verfahren nach einem der Ansprüche 7 oder 8, wobei die in Schritt B) temperierte schwefelvernetzbare Kautschukmischung unmittelbar vor der Zahnradpumpe oder auf der Zuführeinheit zumindest teilweise eine Temperatur im Bereich von 40°C bis 150°C aufweist, bevorzugt im Bereich von 50°C bis 110°C.

9. Verfahren nach einem der Ansprüche 7 bis 9, wobei die in Schritt D) zugefütterte schwefelvernetzbare Kautschukmischung
- zumindest teilweise eine Temperatur in der Zahnradpumpe im Bereich von 40 °C bis 70 °C,
und/oder
- zumindest teilweise einen Druck in der Zahnradpumpe im Bereich von 5 bis 400 bar aufweist, bevorzugt im Bereich von 70 bis 200 bar, besonders bevorzugt im Bereich von 80 bis 150 bar, ganz besonders bevorzugt im Bereich von 90 bis 110 bar
und/oder
- mit einem Durchsatz im Bereich von 10 kg/h bis 1000 kg/h durch die Zahnradpumpe extrudiert wird.

## Claims

1. Apparatus for extrusion of sulfur-crosslinkable rubber mixtures, **characterized in that** the apparatus comprises
- at least one IR emitter for heating sulfur-crosslinkable rubber mixtures and
- at least one gear pump arranged downstream of the one IR emitter for extrusion of rubber mixtures heated using the one IR emitter,
wherein
the IR emitter is configured for heating a sulfur-crosslinkable rubber mixture to at least 40°C,
**characterized in that**
the apparatus additionally comprises a control unit configured for controlling the temperature of a rubber mixture by means of the IR emitter according to
- the propulsive power for rotating the gears of the gear pump and/or
- the pressure of the rubber mixture in the gear pump
and/or
- the pressure variations of the rubber mixture in the gear pump and/or
- the weight-per-meter variations of the extruded rubber mixture downstream of the gear pump.
zu regeln.

2. Apparatus according to Claim 1, wherein the apparatus comprises measurement sensors, wherein one or more of the measurement sensors are configured and arranged for determining the temperature and the pressure of the rubber mixture in the gear pump.

3. Apparatus according to any of the preceding claims, wherein the apparatus comprises a mixer for producing sulfur-crosslinkable rubber mixtures which is upstream of the IR emitter.

4. Apparatus according to any of the preceding claims, wherein the apparatus additionally comprises at least one feed unit for supplying rubber mixtures into the downstream gear pump, wherein the feed unit comprises a roller mill or an extruder, wherein the feed unit is preferably downstream of the IR emitter.

5. Apparatus according to any of the preceding claims, wherein
- the IR emitter is adapted for heating a sulfur-crosslinkable rubber mixture supplied to the feed unit or to the gear pump such that the temperature of the sulfur-crosslinkable rubber mixture upon supplying to the feed unit or to the gear pump is at least partially at least 50°C, preferably at least 60°C.

6. Use of an apparatus as defined in any of the preceding claims for reducing the variations in the weight-per-meter of extruded, sulfur-crosslinkable rubber mixtures.

7. Process for producing an extruded sulfur-crosslinkable rubber mixture comprising the process steps of:
A) producing a sulfur-crosslinkable rubber mixture using a mixer or providing a sulfur-crosslinkable rubber mixture, wherein the sulfur-crosslinkable rubber mixture preferably comprises at least 70 phr of natural rubber,
B) heating the sulfur-crosslinkable rubber mixture produced or provided in step A) to at least 40°C using an IR emitter,
C) optionally measuring the temperature of the rubber mixture in the heating unit,
D) supplying the sulfur-crosslinkable rubber mixture heated in step B) or measured in step C) to a gear pump at a temperature of 35°C or more and extruding the supplied rubber mixture in the gear pump and
E) controlling the temperature of a rubber mixture using the IR emitter according to
- the propulsive power for rotating the gears of the gear pump and/or
- the pressure of the rubber mixture in the gear pump and/or
- the pressure variations of the rubber mixture in the gear pump and/or
- the weight-per-meter variations of the extruded rubber mixture downstream of the gear pump.

8. Process according to either of Claims 7 and 8, wherein the sulfur-crosslinkable rubber mixture heated in step B) at least partially has a temperature in the range from 40°C to 150°C, preferably in the range from 50°C to 110°C, immediately upstream of the gear pump or in the feed unit.

9. Process according to any of Claims 7 to 9, wherein the sulfur-crosslinkable rubber mixture supplied in step D)
- at least partially has a temperature in the gear pump in the range from 40°C to 70°C
and/or
- at least partially has a pressure in the gear pump in the range from 5 to 400 bar, preferably in the range from 70 to 200 bar, particularly preferably in the range from 80 to 150 bar, very particularly preferably in the range from 90 to 110 bar and/or
- is extruded through the gear pump at a throughput in the range from 10 kg/h to 1000 kg/h.

## Revendications

1. Dispositif pour l'extrusion de mélanges de caoutchoucs réticulables au soufre, **caractérisé en ce que** le dispositif comprend
- au moins un émetteur IR destiné à chauffer des mélanges de caoutchouc réticulables au soufre,
et
- au moins une pompe à engrenages placée en aval de l'émetteur IR pour l'extrusion de mélanges de caoutchouc chauffés au moyen de l'émetteur IR, umfasst, wobei
l'émetteur IR étant conçu pour chauffer un mélange de caoutchouc réticulable au soufre à au moins 40 °C,
**caractérisé en ce que**
le dispositif comprend en outre une unité de régulation qui est configurée pour régler la température d'un mélange de caoutchouc au moyen de l'émetteur IR en fonction
- de la puissance d'entraînement pour faire tourner les engrenages de la pompe à engrenages
et/ou
- de la pression du mélange de caoutchouc dans la pompe à engrenages et/ou
- des variations de pression du mélange de caoutchouc dans la pompe à engrenages
et/ou
- des variations du poids au mètre du mélange de caoutchouc extrudé après la pompe à engrenages.
zu regeln.

2. Dispositif selon la revendication 1, dans lequel le dispositif comprend des capteurs de mesure, un ou plusieurs des capteurs de mesure étant configurés et agencés pour déterminer la température et la pression du mélange de caoutchouc dans la pompe à engrenages.

3. Dispositif selon l'une quelconque des revendications précédentes, dans lequel le dispositif comprend un mélangeur pour la préparation de mélanges de caoutchouc réticulables au soufre, qui est placé en amont de l'émetteur IR.

4. Dispositif selon l'une quelconque des revendications précédentes, dans lequel le dispositif comprend en outre au moins une unité d'amenée pour amener des mélanges de caoutchouc dans la pompe à engrenages placée en aval, l'unité d'amenée comprenant un laminoir ou une extrudeuse, l'unité d'amenée étant de préférence placée en aval de l'émetteur IR.

5. Dispositif selon l'une quelconque des revendications précédentes, dans lequel
- l'émetteur IR est adapté pour chauffer un mélange de caoutchouc réticulable au soufre alimenté dans l'unité d'amenée ou dans la pompe à engrenages de telle sorte que la température du mélange de caoutchouc réticulable au soufre lors de l'alimentation dans l'unité d'amenée ou dans la pompe à engrenages présente au moins partiellement au moins 50 °C, de préférence au moins 60 °C.

6. Utilisation d'un dispositif tel que défini dans l'une quelconque des revendications précédentes pour réduire les variations du poids au mètre de mélanges de caoutchouc réticulables au soufre extrudés.

7. Procédé de fabrication d'une composition de caoutchouc réticulable au soufre extrudée, comprenant les étapes de procédé suivantes :
A) la préparation d'une composition de caoutchouc réticulable au soufre au moyen d'un mélangeur ou la fourniture d'une composition de caoutchouc réticulable au soufre, la composition de caoutchouc réticulable au soufre comprenant de préférence au moins 70 pce de caoutchouc naturel,
B) la thermorégulation du mélange de caoutchouc réticulable au soufre préparé ou fourni à l'étape A) au moyen d'un émetteur IR à au moins 40 °C,
C) la mesure optionnelle de la température du mélange de caoutchouc dans l'unité de thermorégulation,
D) l'alimentation d'une pompe à engrenages avec le mélange de caoutchouc réticulable au soufre à une température de 35 °C ou plus, thermorégulé à l'étape B) ou mesuré à l'étape C), et l'extrusion du mélange de caoutchouc alimenté dans la pompe à engrenages ; et
E) la régulation de la température d'un mélange de caoutchouc au moyen de l'émetteur IR en fonction
- de la puissance d'entraînement pour faire tourner les engrenages de la pompe à engrenages, et/ou
- de la pression du mélange de caoutchouc dans la pompe à engrenages et/ou
- des variations de pression du mélange de caoutchouc dans la pompe à engrenages, et/ou
- des variations du poids au mètre du mélange de caoutchouc extrudé après la pompe à engrenages.

8. Procédé selon l'une quelconque des revendications 7 ou 8, dans lequel le mélange de caoutchouc réticulable au soufre thermorégulé à l'étape B) présente, directement avant la pompe à engrenages ou au niveau de l'unité d'amenée, au moins partiellement une température dans la plage de 40 °C à 150 °C, de préférence dans la plage de 50 °C à 110 °C.

9. Procédé selon l'une quelconque des revendications 7 à 9, dans lequel le mélange de caoutchouc réticulable au soufre alimenté à l'étape D) présente
- au moins partiellement, une température dans la pompe à engrenages dans la plage de 40 °C à 70 °C,
et/ou
- au moins partiellement une pression dans la pompe à engrenages dans la plage de 5 à 400 bars, de préférence dans la plage de 70 à 200 bars, de manière particulièrement préférée dans la plage de 80 à 150 bars, de manière tout particulièrement préférée dans la plage de 90 à 110 bars,
et/ou
- est extrudé à un débit dans la plage de 10 kg/h à 1 000 kg/h par la pompe à engrenages.
